(19) Europäisches Patentamt
European Patent Office
Office européen des brevets

(11) **EP 4 439 951 A1**

(12) **EUROPÄISCHE PATENTANMELDUNG**

(43) Veröffentlichungstag:
**02.10.2024 Patentblatt 2024/40**

(21) Anmeldenummer: **23166084.6**

(22) Anmeldetag: **31.03.2023**

(51) Internationale Patentklassifikation (IPC):
**H02M 1/12** (2006.01)  **H02M 1/15** (2006.01)
**H02M 1/44** (2007.01)

(52) Gemeinsame Patentklassifikation (CPC):
**H02M 1/123; H02M 1/15;** H02M 1/44

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Hänsel, Stefan**
**91080 Spardorf (DE)**

(74) Vertreter: **Siemens Patent Attorneys**
**Postfach 22 16 34**
**80506 München (DE)**

(54) **AKTIVES STÖRFILTER**

(57) Einem aktives Störfilter in Feedforward-Topologie zur Reduzierung von Störsignalen in einer elektronischen Schaltung umfasst einen Einkopplungs-Kondensator und einen Verstärker in Integriererschaltung mit einem Rückkopplungs-Kondensator, wobei dem Rückkopplungs-Kondensator eine Induktivität parallelgeschaltet ist.

FIG 2

EP 4 439 951 A1

**Beschreibung**

Die Erfindung betrifft ein aktives Störfilter in Feedforward-Topologie zur Reduzierung von Störsignalen in einer elektronischen Schaltung, umfassend eine Sensorschaltung, einen Verstärker und eine Einkopplungsschaltung.

EMV-Störungen, die von Umrichtern und schaltenden Stromversorgungen erzeugt werden, müssen gedämpft werden, damit Standards für die elektromagnetische Verträglichkeit eingehalten werden können. Die Dämpfung kann mit passiven Komponenten vorgenommen werden. Diese sind aber typischerweise schwer und groß.

Eine Alternative zu rein passiven Filtern sind aktive EMV-Filter (AEF). Bei aktiven Filtern werden aktive Komponenten wie bspw. Operationsverstärker verwendet und damit durch geeignete Beschaltung die Störungen aktiv unterdrückt.

Gemeinsam ist den Filtertopologien, dass das Nutzsignal, beispielsweise bei einer AC-Schaltung ein Sinussignal bei einer fundamentalen Frequenz von 50 Hz, nur sehr geringfügig kompensiert werden darf. Hierzu werden üblicherweise Hochpassfilter als Eingangsfilter verwendet, die das Nutzsignal stark dämpfen und somit der nachfolgenden hohen Verstärkung des aktiven Verstärkers entgegenwirken. Der Nachteil dieser Lösung ist, dass bei der nachfolgenden Verstärkung auch unerwünschte niederfrequente Störungen verstärkt werden und sich somit ein schlechtes Signal- zu Rauschverhältnis ("S/R") ergibt.

Es ist Aufgabe der Erfindung, ein verbessertes aktives Störfilter in Feedforward-Topologie anzugeben, das mit einer geringeren Anzahl an Bauteilen auskommt und ein besseres S/R-Verhältnis im niederen Frequenzbereich bereitstellt. Insbesondere soll es sich dabei sich um eine Feedforward-Topologie mit Strommessung ("Current Sense") handeln.

Diese Aufgabe wird durch das aktive Störfilter mit den in Anspruch 1 angegebenen Merkmalen gelöst.

Das erfindungsgemäße aktive Störfilter in Feedforward-Topologie zur Reduzierung von Störsignalen in einer elektronischen Schaltung umfasst eine Sensorschaltung zur Erfassung eines elektrischen Störsignals in einer Leitung der Schaltung. Es umfasst weiterhin eine Verstärkerschaltung mit einem Verstärker, wobei die Sensorschaltung mit einem ersten Eingang des Verstärkers gekoppelt ist und eine Einkopplungsschaltung zur Einkopplung eines das Störsignal reduzierenden Ausgangs-Signals der Verstärkerschaltung in die Schaltung. Dabei ist der Verstärker als Integrator beschaltet und umfasst dafür zwischen seinem Ausgang und dem ersten Eingang einen Kondensator, wobei dem Kondensator eine Induktivität parallelgeschaltet ist.

Falls das Störfilter auf einem spannungskompensierenden Operationsverstärker beruht, dann ist der Kondensator direkt mit dem ersten Eingang des Verstärkers verbunden. Beruht die Schaltung dagegen auf einem stromkompensierenden Operationsverstärker, dann ist ein Feedback-Widerstand in Serie zum Kondensator zwischen dem Ausgang und dem ersten Eingang des Verstärkers angeordnet.

Vorteilhaft wird bei niedrigen Frequenzen der Kondensator durch die Induktivität überbrückt. Dadurch wird erreicht, dass Frequenzen unterhalb einer Schwelle, die durch den Wert der Induktivität und des Kondensators festgelegt sind, sehr stark bei der Erzeugung des Ausgangssignals unterdrückt werden. Es wird also mit anderen Worten ein Eingangsfilter geschaffen, durch das beispielsweise das Nutzsignal der Schaltung von einer Filterung im Wesentlichen ausgeschlossen wird. Es wird also ein integratives Verhalten von einer Startfrequenz $f_{AEF}$ bis hin zu einigen Megahertz erreicht. Dabei hängt die obere Eckfrequenz vom Operationsverstärker selbst ab und kann durch die Wahl des verwendeten Operationsverstärker auch noch zu höheren Frequenzen geschoben werden.

Bei dem Verstärker kann es sich um eine Verstärkerschaltung mit diskreten Transistoren handeln oder um einen integrierten Operationsverstärker. Bei einem Operationsverstärker ist der erste Eingang sein invertierender Eingang und der zweite Eingang sein nicht-invertierender Eingang. Operationsverstärker sind vorteilhaft in vielen Variationen der Eigenschaften verfügbar.

Die Einkopplungsschaltung umfasst bevorzugt einen Einkopplungs-Kondensator. Dieser ist zweckmäßig zwischen dem Ausgang des Verstärkers und der Leitung an-geordnet.

Vorteilhafte Ausgestaltungen des erfindungsgemäßen Störfilters gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:

Das aktive Störfilter kann eine zweite Sensorschaltung zur Aufnahme von verbleibenden Störungen umfassen, wobei die zweite Sensorschaltung auf einer von der ersten Sensorschaltung abgewandten Seite der Einkopplungs-Schaltung mit der Leitung verbunden ist. Die zweite Sensorschaltung umfasst bevorzugt eine Spannungsmesseinrichtung.

Die zweite Sensoreinrichtung erlaubt vorteilhaft die Aufnahme der Störungen, die nach der Einkopplung des ausgleichenden Ausgangssignals des Operationsverstärkers in die Leitung verbleiben. Der zweite Sensor erlaubt es also, zu bestimmen, ob das aktive Störfilter die Störungen optimal ausgleicht oder ob Störungen verbleiben, die darauf zurückzuführen sind, dass Abweichungen der verbauten Elemente zu einer fehlerhaften Kompensation führen.

Dadurch wird die Aufnahme und Prüfung von verbleibenden Störungen ermöglicht. Im Gegensatz zu Feedback-Topologien, wo diese automatisch in das Störfilter zurückgekoppelt werden, können Störungen bei der vorliegenden Feedforward-Topologie verbleiben und werden nicht automatisch ausgeglichen. Die zweite Sensorschaltung bietet ein Mess-Signal, mit dem eine weitere Behandlung von verbleibenden Störungen möglich ist.

In einer vorteilhaften Ausgestaltung der Erfindung ist ein steuerbarer Eingangswiderstand zwischen der Sensorschaltung und dem Kondensator angeordnet. Der steuerbare Eingangswiderstand ist zwischen die Sensorschaltung und den ersten Eingang des Verstärkers geschaltet, wobei zwischen dem steuerbaren Eingangswiderstand und dem ersten Eingang noch der Feedback-Widerstand angeordnet sein kann.

Die Verstärkung des Operationsverstärkers muss normalerweise sehr genau bei 1 liegen, damit die vom Sensor aufgenommenen Störungen durch die Einspeisung des vom Operationsverstärker ausgegebenen Signals genau ausgeglichen werden. Diese Vorgabe ist durch Herstellungsschwankungen schwierig einzuhalten und erfordert eine genaue Anpassung der verwendeten Komponenten, insbesondere des Werts des Eingangswiderstands. Ein automatischer Ausgleich von Abweichungen wie bei einer Feedback-Topologie erfolgt bei der Feedforward-Topologie nicht. Treten Abweichungen der idealen Werte in laufenden Betrieb auf, beeinträchtigen diese die Funktion des aktiven Störfilters, indem die Störungen je nach Richtung der Abweichungen nicht ausreichend ausgeglichen oder überkompensiert werden.

Durch einen steuerbaren Eingangswiderstand wird vorteilhaft erreicht, dass auch im laufenden Betrieb auftretende Abweichungen von den idealen Werten ausgeglichen werden können und somit der optimale Betrieb des aktiven Störfilters trotz dieser Abweichungen gewährleistet bleibt.

Der steuerbare Eingangswiderstand kann ein temperaturabhängiger Widerstand sein. Temperaturabhängige Widerstände stellen weithin verfügbare Standardbauteile dar, die auch als Temperatursensoren verwendet werden, beispielsweise in Form von "Pt100"-Elementen oder "Pt500"-Elementen. Sie sind einfache und kleine metallische Widerstände, die ein sehr gutes Frequenzverhalten bis zu mehreren 100 MHz aufweisen. Dazu kommt, dass Änderungen des Eingangswiderstands zur Einstellung der richtigen Verstärkung des Operationsverstärkers in vergleichsweise großen Zeiträumen vorgenommen werden müssen, die von Sekunden bis Minuten oder mehr betragen, sodass die relative Trägheit eines temperaturabhängigen Widerstands durch seine thermische Masse eher vorteilhaft ist, um Schwingungen zu vermeiden.

Besonders vorteilhaft ist es, wenn der steuerbare Eingangswiderstand in thermischem Kontakt mit einem Temperatursteuerelement angeordnet ist und eine Steuereinrichtung für das Temperatursteuerelement vorhanden ist, ausgestaltet zur Aufnahme eines Mess-Signals von der zweiten Sensorschaltung und einer Ansteuerung des Temperatursteuerelements basierend auf dem Mess-Signal. Hierdurch wird eine Rückkopplung von der zweiten Sensoreinrichtung zum Verstärker geschaffen, womit dessen Übertragungsfunktion so nachgeregelt wird, dass die Genauigkeit des Ausgleichs von Störungen erhalten bleibt, auch wenn sich im laufenden Betrieb leichte Veränderungen bei den Werten der verwendeten Komponenten ergeben. So begrenzt eine Abweichung von 1 % bei den Werten der Komponenten die beste erreichbare Unterdrückung von Störungen auf 40 dB; wird der Fehler durch die zusätzliche Rückkopplung auf 0,1 % gesenkt, steigt die erreichbare Unterdrückung auf 60 dB.

Die Steuereinrichtung kann einen Analog-Digital-Wandler zur Wandlung des Mess-Signals der zweiten Sensoreinrichtung umfassen und eine Einrichtung zur digitalen Hochpassfilterung des digitalisierten Signals. Für die Rückkopplung der verbleibenden Störungen ist es wichtig, dass das Nutzsignal weitestgehend aus dem Mess-Signal herausgefiltert ist, um Einflüsse der Veränderung des Nutzsignals zu vermeiden. Gleichzeitig muss die Filterung aber nicht schnell sein. Unter diesen Voraussetzungen ist eine digitale Filterung für die Signalqualität ideal.

Das aktive Störfilter kann einen Temperatursensor zur Erfassung der Temperatur des temperaturgesteuerten Widerstands aufweisen, wobei der Temperatursensor mit der Steuereinrichtung verbunden ist. Dadurch wird erreicht, dass von außen auf den temperaturgesteuerten Widerstand einwirkende Störungen, beispielsweise eine Beeinflussung durch Luftbewegung (Wind), bereits am Widerstand selbst detektiert und ausgeglichen werden können. Zwar würde auch die Rückkopplung über die zweite Sensoreinrichtung für einen Ausgleich sorgen, dazu wäre es aber erforderlich, dass die Störung (Wind) zuerst für eine Veränderung des Widerstandswerts des temperaturgesteuerten Widerstands sorgt und dadurch die Verstärkung des Verstärkers fehlerhaft verändert wird. Dadurch wiederum würden die Störsignale unvollständig ausgeglichen und die zweite Messeinrichtung würde möglicherweise erhebliche Reststörungen detektieren, die dann in der Folge ausgeglichen würden durch eine Reaktion der Heizeinrichtung. Eine solche Reaktion wäre aber vergleichsweise langsam und würde zuerst einen fehlerhaften Ausgleich der Störsignale erfordern. Durch den Temperatursensor wird dieser Vorgang vermieden.

Der steuerbare Eingangswiderstand kann ein digital veränderbarer Widerstand sein. Insbesondere kann der digital veränderbare Widerstand über eine schaltbare Widerstandskaskade aufgebaut sein. In diesem Fall umfasst die Steuereinrichtung einen Analog-Digital-Wandler zur Aufnahme und Digitalisierung des Signals der zweiten Sensoreinrichtung. Ein Digital-Analog-Wandler kann hingegen entfallen, da der steuerbare Eingangswiderstand nun direkt digital ansteuerbar ist.

Bevorzugt umfasst die Sensorschaltung einen Stromsensor. In diesem Fall handelt es sich um eine "Current Sense"-Schaltung. Wird stattdessen ein Spannungssensor verwendet, handelt es sich um eine "Voltage Sense"-Schaltung.

Eine elektronische Schaltung, in der das Störfilter bevorzugt zum Einsatz kommt, ist beispielsweise ein Stromrichter wie ein Umrichter oder DC/DC-Wandler oder ein Schaltnetzteil.

Die elektronische Schaltung umfasst wenigstens einen Phasenleiter und einen Neutralleiter und die Sensorschaltung und die Einkopplungsschaltung sind zweckmäßig mit dem Phasenleiter verbunden. Liegen mehrere Phasenleiter vor, sind die bezeichneten Elemente zweckmäßig mit genau einer Phasenleitung verbunden. Es kann dann weitere gleichartige aktive Störfilter in der Schaltung geben, die mit jeweils einer der anderen Phasenleiter verbunden sind, sodass eine Reduzierung der Störungen in jeder der Phasenleitungen vorgenommen wird. Der zweite Eingang des Verstärkers ist in diesem Fall mit dem Neutralleiter oder Erdleiter verbunden.

Das aktive Störfilter kann in einer Weiterbildung der Erfindung ausgestaltet sein, ausschließlich Gleichtaktstörungen zu kompensieren, insbesondere in einem Mehrphasensystem, also in einer Schaltung mit wenigstens zwei Phasenleitern. Dazu kann die Sensorschaltung ausgestaltet sein, die Ströme in allen Phasen zu addieren oder als Summe aufzunehmen. Beispielsweise kann pro Phase ein Stromsensor vorhanden sein und eine Einrichtung zur Summenbildung für die Signale der Stromsensoren. Alternativ können die Phasenleiter in einem Stromsensor zusammengeführt sein, wobei der Stromsensor so ausgestaltet ist, dass er nur den Summenstrom aufnimmt.

In diesem Fall kann die Einkopplung des Ausgangssignals des Verstärkers über einen kapazitiv gebildeten Sternpunkt erfolgen, an den der Einkopplungskondensator angeschlossen ist. Alternativ kann die Einkopplung auch direkt in einen der Phasenleiter erfolgen, wenn die Schaltung beispielsweise X-Kondensatoren zwischen den Phasenleitern aufweist, da diese eine wesentlich höhere Kapazität aufweisen als der Einkopplungskondensator und dadurch die Einkopplung durch die X-Kondensatoren auf alle Phasenleiter wirkt.

Elemente der elektronischen Schaltung wie beispielsweise die Schalter eines aktiven Gleichrichters bilden dabei eine Störquelle aus und die Sensorschaltung ist mit ihrem ersten Knotenpunkt bezüglich der Störquelle vor der Einkopplungsschaltung mit dem Phasenleiter verbunden. Je nach Anwendung kann der erste Knotenpunkt von der Störquelle aus gesehen in Richtung eines Netzanschlusses angeordnet sein oder in Richtung einer Last, aber näher an der Störquelle als die Einkopplungsschaltung.

Ist der Stromrichter mehrphasig, also beispielsweise dreiphasig und umfasst dementsprechend drei Phasenleiter, dann umfasst er bevorzugt für jeden Phasenleiter ein aktives Störfilter der beschriebenen Art. Jedes der aktiven Störfilter ist dann mit einem der Phasenleiter und dem Neutralleiter oder Erdleiter verbunden.

Alternativ kann, wie bereits beschrieben, in einer mehrphasigen Schaltung auch eine Unterdrückung von nur Gleichtaktstörungen erfolgen. In diesem Fall kommt auch in einer mehrphasigen Schaltung nur genau ein aktives Störfilter zum Einsatz.

Das aktive Störfilter ist vorteilhaft modular, d.h. es kann auch in bereits bestehende Schaltungen nachträglich eingebracht werden. Die bestehenden Komponenten der Schaltung, beispielsweise des Umrichters, müssen dabei nicht verändert werden. Die Komponenten des aktiven Störfilters sind zweckmäßig an die bereits vorhandenen Komponenten der Schaltung anzupassen.

Im Folgenden wird die Erfindung anhand der in den Figuren dargestellten Ausführungsbeispiele näher beschrieben und erläutert. Es zeigen:

Figur 1 einen DC/DC-Wandler mit aktivem Störfilter,

Figur 2 ein Schaltbild für das aktive Störfilter,

Figur 3 ein Diagramm mit der Open-Loop-Verstärkung und der Übertragungsfunktion für das aktive Störfilter,

Figur 4 einen schematischen Aufbau eines temperaturgesteuerten Widerstands,

Figur 5 den DC/DC-Wandler mit aktivem Störfilter, in dem der temperaturgesteuerte Widerstand verwendet wird,

Figur 6 ein Diagramm mit der Filterwirkung des aktiven Störfilters im Vergleich zu einem passiven Störfilter bei einer ersten Grenzfrequenz für das Störfilter,

Figur 7 ein Diagramm mit der Filterwirkung des aktiven Störfilters im Vergleich zum passiven Störfilter bei einer zweiten, kleineren Grenzfrequenz für das Störfilter,

Figur 8 ein Schaltbild für eine dreiphasige Schaltung mit einem aktiven Störfilter zur Kompensation von Gleichtaktstörungen.

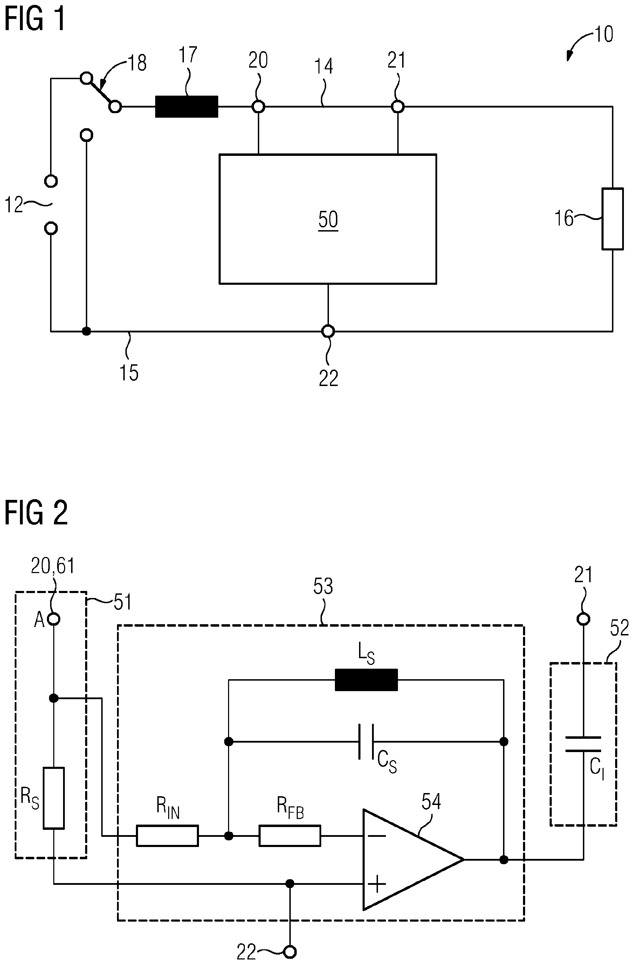

Figur 1 zeigt einen vereinfacht dargestellten DC/DC-Wandler 10, in dem ein aktives Störfilter 50 gemäß einem Ausführungsbeispiel für die Erfindung angeordnet ist. Der DC/DC-Wandler 10 umfasst eine DC-Spannungsquelle 12, die als Eingangsspannung dient. Die DC-Spannungsquelle 12 ist über einen Hinleiter 14 und einen Rückleiter 15 mit einer Last 16 verbunden, die in diesem Beispiel als Widerstand dargestellt ist.

Im Hinleiter 14 ist ein Umschalter 18 angeordnet. Der Umschalter 18 ist so angeordnet, dass er die Verbindung des Hinleiters 14 zur DC-Spannungsquelle 12 auftrennen kann und dabei eine direkte Verbindung zwischen Hinleiter 14 und Rückleiter 15 schließt, dabei also die DC-Spannungsquelle 12 überbrückt. Auf den Umschalter 18 folgend ist eine Konverter-Induktivität 17 angeordnet.

Im laufenden Betrieb wird der Umschalter 18 mit einer Schaltfrequenz von beispielsweise 10 kHz umgeschaltet und sorgt somit für eine resultierende Spannung an der Last, die einen DC-Anteil aufweist, der geringer als die Spannung der DC-Spannungsquelle 12 ist und weiterhin einen AC-Spannungsanteil aufweist, dessen primäre Frequenz der Schaltfrequenz entspricht. Da die entstehende Spannungsform nicht sinusförmig ist, entstehen weitere Frequenzanteile bis zu sehr hohen Frequenzen.

Das aktive Störfilter 50 ist an einem ersten und zweiten Knotenpunkt 20, 21 mit dem Hinleiter 14 verbunden und an einem dritten Knotenpunkt 22 mit dem Rückleiter 15. Bei dem aktiven Störfilter 50 handelt es sich um ein Störfilter in Feedback-Topologie. Daher können der erste und zweite Knotenpunkt 20, 21 nicht zusammengelegt werden, vielmehr ist die Reihenfolge der Anbindung der internen Elemente des aktiven Störfilters 50 wichtig.

Der Aufbau des aktiven Störfilters 50 ist in Figur 2 dargestellt. Das aktive Störfilter 50 umfasst eine Sensorschaltung 51, eine Einkopplungsschaltung 52 und eine zwischen Sensorschaltung 51 und Einkopplungsschaltung 52 geschaltete Verstärkerschaltung 53.

Die Sensorschaltung 51 ist eine Serienschaltung aus einem Stromsensor, in diesem Beispiel einer Rogowski-Spule 61 und einem Sensor-Widerstand $R_S$. Diese Serienschaltung ist zwischen den ersten Knotenpunkt 20 und den dritten Knotenpunkt 22, also zwischen Hinleiter 14 und Rückleiter 15 geschaltet.

Die Verstärkerschaltung 53 umfasst einen Operationsverstärker 54. Dessen invertierender Eingang ist über einen Rückkopplungs-Widerstand $R_{FB}$ und einen Eingangs-Widerstand $R_{IN}$ mit einem vierten Knotenpunkt 62 zwischen der Rogowski-Spule 61 und dem Sensor-Widerstand $R_S$ verbunden. Ein fünfter Knotenpunkt 63 zwischen dem Rückkopplungs-Widerstand $R_{FB}$ und dem Eingangswiderstand $R_{IN}$ ist über einen Sensor-Kondensator $C_S$ mit dem Ausgang des Operationsverstärkers 54 verbunden. In dieser Beschaltung agiert der Operationsverstärker 54 als Integrator.

Der nicht-invertierende Eingang des Operationsverstärkers 54 ist direkt mit dem dritten Knotenpunkt 22, also hier dem Rückleiter 15 verbunden.

Die Einkopplungsschaltung 52 umfasst in diesem Ausführungsbeispiel einen Injektor-Kondensator $C_I$. Der Injektor-Kondensator $C_I$ ist zwischen den zweiten Knotenpunkt 21 und den Ausgang des Operationsverstärkers 54 geschaltet.

Parallel zum Sensor-Kondensator $C_S$ ist in dieser Topologie eine Sensor-Induktivität LS geschaltet. Die Sensor-Induktivität $L_S$ überbrückt bei geringen Frequenzen den Sensor-Kondensator $C_S$ und senkt somit die Verstärkung bei niedrigen Frequenzen. Dadurch entfällt die Notwendigkeit einer anderweitigen Eingangsfilterung des gemessenen Stroms, um niederfrequente Signale wie beispielsweise das Nutzsignal auszublenden.

Es ergibt sich mit der beschriebenen Verschaltung des Operationsverstärkers 54 ein integratives Verhalten von einer Startfrequenz $f_{AEF}$ bis hin zu einigen Megahertz. Die obere Eckfrequenz hängt dabei vom gewählten Operationsverstärker 54 ab und kann bei geeigneter Wahl auch noch bei höheren Frequenzen liegen.

Die Startfrequenz bestimmt sich dabei wie folgt:

$$f_{AEF} = \frac{1}{2\pi\sqrt{L_S \cdot C_S}}$$

Im vorliegenden Ausführungsbeispiel werden die folgenden Werte verwendet:

$R_{IN}$: 26,667 Ω
$R_{FB}$: 1200 Ω
$L_S$: 1 mH
$C_S$: 15 nF
$L_{CONV}$: 100 μH
$C_I$: 400 nF

Auf die sich ergebende Übertragungsfunktion nehmen auch parasitäre Elemente Einfluss, speziell die parasitäre Induktivität $L_I$ im Injektor-Kondensator $C_I$ und die parallele Kapazität $C_{par}$ in der Konverter-Induktivität 17. Deren Werte betragen im vorliegenden Beispiel:

$L_I$: 3 nH
$C_{par}$: 50 pF

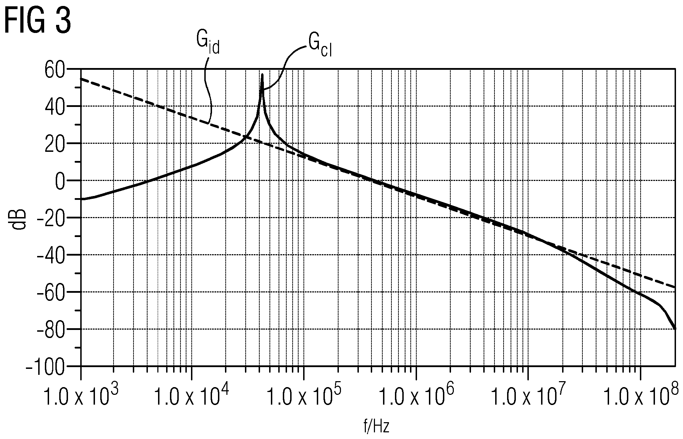

Mit den genannten Werten kann ein aktives Störfilter 50 in Feedforward-Topologie in einem DC/DC-Wandler 10 aufgebaut werden. Figur 3 zeigt neben der Verstärkung eines idealen Integrierers $G_{id}$ auch die Übertragungsfunktion $G_{cl}$ der Verstärkerschaltung. Über den Eingangswiderstand $R_{IN}$ und die Kapazität des Sensorkondensators $C_S$ kann die Verstärkung des Integrierers eingestellt werden:

$$v_{out} = \frac{1}{-R_{IN}C_S} \int v_{in}dt$$

$$v_{in} = Const \cdot i_{noise}$$

Mit den genannten Werten für die Komponenten des aktiven Störfilters ergibt sich die Startfrequenz zu $f_{AEF} \approx 41$ kHz.

Über den Eingangswiderstand $R_{IN}$ kann das aktive Störfilter in seinen optimalen Betriebspunkt gebracht werden. Dieser liegt vor, wenn gilt:

$$R_{\text{IN}} = \frac{C_{\text{inj}}}{C_{\text{S}}} \cdot Const$$

Ist eine geringe Toleranz der Komponenten und der Strommessung gegeben, kann der Eingangswiderstand $R_{\text{IN}}$ während des Designs passend gewählt werden. Gibt es größere Toleranzen, die aber bei der Produktion bekannt sind, kann durch eine initiale Messung der Widerstandswert angepasst werden.

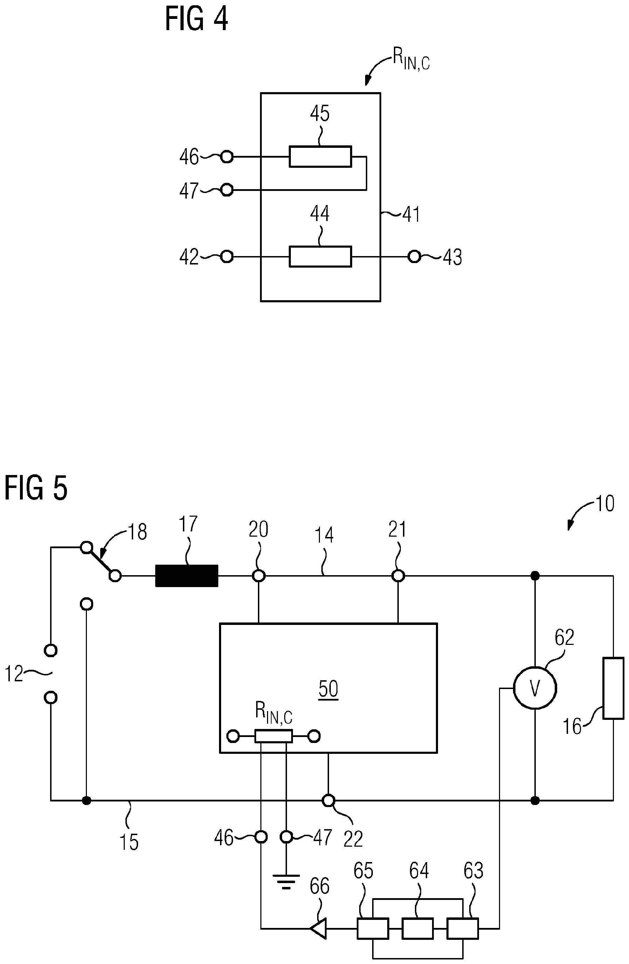

Ist mit Toleranzen während des Betriebs zu rechnen, kann der Eingangswiderstand $R_{\text{IN}}$ aber auch im Betrieb angepasst werden. In diesem Beispiel wird dazu vorteilhaft ein temperaturgesteuerter Widerstand $R_{\text{IN,C}}$ verwendet. Der Aufbau des temperaturgesteuerten Widerstands $R_{\text{IN,C}}$ ist schematisch in Figur 4 dargestellt.

Der temperaturgesteuerte Widerstand $R_{\text{IN,C}}$ umfasst ein Substrat 41. Auf diesem ist ein temperaturabhängiger Widerstand 44, beispielsweise ein PT500-Element angeordnet. Dessen Anschlüsse 42, 43 stellen die Lastanschlüsse des temperaturgesteuerten Widerstands $R_{\text{IN,C}}$ dar. Widerstände wie das PT500-Element vorteilhaft einfach aufgebaute und kleine Widerstände, die eine weitgehend lineare und im hier betrachteten Bereich bis zu mehreren 100 MHz frequenzunabhängige Abhängigkeit des elektrischen Widerstands von der Temperatur zeigen. Sie sind dafür im einfachsten Fall Metallstreifen aus beispielsweise Platin und können daher zur Integration auch als mikrostrukturierte Platin-Streifen erstellt werden. Eine einfache Aufbauvariante verwendet SMD-Bauelemente, die weithin verfügbar und dennoch klein sind im Vergleich zu typischen passiven Filterkomponenten.

Ebenfalls auf dem Substrat 41 angeordnet ist ein Heizelement 45. Für das Heizelement gibt es verschiedene Möglichkeiten der Ausgestaltung, im einfachsten Fall ist es aber ebenfalls als elektrischer Widerstand ausgestaltet. Dessen Anschlüsse stellen die Steueranschlüsse 46, 47 für den temperaturgesteuerten Widerstand $R_{\text{IN,C}}$ dar. Durch Abwärme des Widerstands, der das Heizelement 45 darstellt, wird das Substrat 41 aufgeheizt und dadurch auch der temperaturabhängige Widerstand 44, wodurch sich sein Widerstandswert ändert.

In der vorliegenden Anwendung wird ein Eingangswert für das Heizelement 45 durch eine Rückkopplung im DC/DC-Wandler 10 erzeugt. Ein entsprechender veränderter Aufbau für den DC/DC-Wandler 10 ist in Figur 5 dargestellt. Die Elemente des DC/DC-Wandlers 10 selbst und der Aufbau des aktiven Störfilters 50 sind dabei weitgehend unverändert zu den Aufbauten, die in den Figuren 1 und 2 dargestellt sind. Das aktive Störfilter 50 verwendet aber nun den temperaturgesteuerten Widerstand $R_{\text{IN,C}}$ an der Stelle des Eingangswiderstands $R_{\text{IN}}$. Einer von dessen Steueranschlüssen 47 ist mit Erde verbunden, während der andere Steueranschluss 46 sein Signal aus einer weiteren Messung im DC/DC-Wandler 10 erhält.

Dazu umfasst der DC/DC-Wandler 10 nun eine Spannungsmessung 62, die die Spannung zwischen Hinleiter 14 und Rückleiter 15 ermittelt. Die Anschlüsse an Hinleiter 14 und Rückleiter 15 befinden sich dabei ausgehend von Anschluss der Sensorschaltung 51 hinter dem Anschluss der Einkopplungsschaltung 52, also hinter dem zweiten Knotenpunkt 21 und dem dritten Knotenpunkt 22. Bei dieser Anordnung wird davon ausgegangen, dass eine Störquelle im DC/DC-Wandler in der anderen Richtung, also vor dem ersten Knotenpunkt 20 angeordnet ist, also in Richtung des Umschalters 18. Sie kann beispielsweise im Umschalter 18 selbst bestehen. Durch die gegebene Anordnung nimmt die Spannungsmessung 62 neben dem Nutzsignal die bereits gefilterten Störungen auf. Im Idealfall bliebe hier nur das Nutzsignal selbst, aber ein verbleibender Rest von Störungen wird typischerweise ebenfalls aufgenommen. Ein solcher Rest bleibt systematisch bestehen, wenn die Verstärkung der Verstärkerschaltung nicht exakt an die verwendeten Komponenten angepasst ist oder sich im laufenden Betrieb kleine Differenzen ergeben haben, da in der vorliegenden Feedforward-Schaltung kein automatischer Ausgleich erfolgen kann.

Das Nutzsignal muss für die Nachjustierung des temperaturgesteuerten Widerstands $R_{\text{IN,C}}$ sehr genau ausgefiltert werden, um jeden Einfluss des Nutzsignals auf die Nachjustierung der Störfilterung zu vermeiden. Das passiert im vorliegenden Beispiel vorteilhaft digital durch eine digitale Signalverarbeitung 64. Diese wird gespeist durch einen Analog-Digital-Wandler 63, der das Signal der Spannungsmessung 62 aufnimmt und digitalisiert. Nach Filterung und Größenanpassung wird das resultierende digitale Signal in einem Digital-Analog-Wandler 65 rückgewandelt und ein Verstärker 66 speist daraus durch Anschluss an den Steueranschluss 46 das Heizelement 45 im temperaturgesteuerten Widerstand $R_{\text{IN,C}}$.

Hierdurch ist eine Rückkopplung geschaffen, mit der der Wert des temperaturgesteuerten Widerstands $R_{\text{IN,C}}$ nachjustiert werden kann, wenn systematisch Störungen nach der Filterung verbleiben. Der Nachteil von möglichen Schwingungen von Feedback-Topologien für aktive Störfilter wird dabei vermieden, da die Nachjustierung über die Temperatur vergleichsweise träge ist und Änderungen mit um Größenordnungen kleineren Frequenzen passieren als die Störsignale selbst haben.

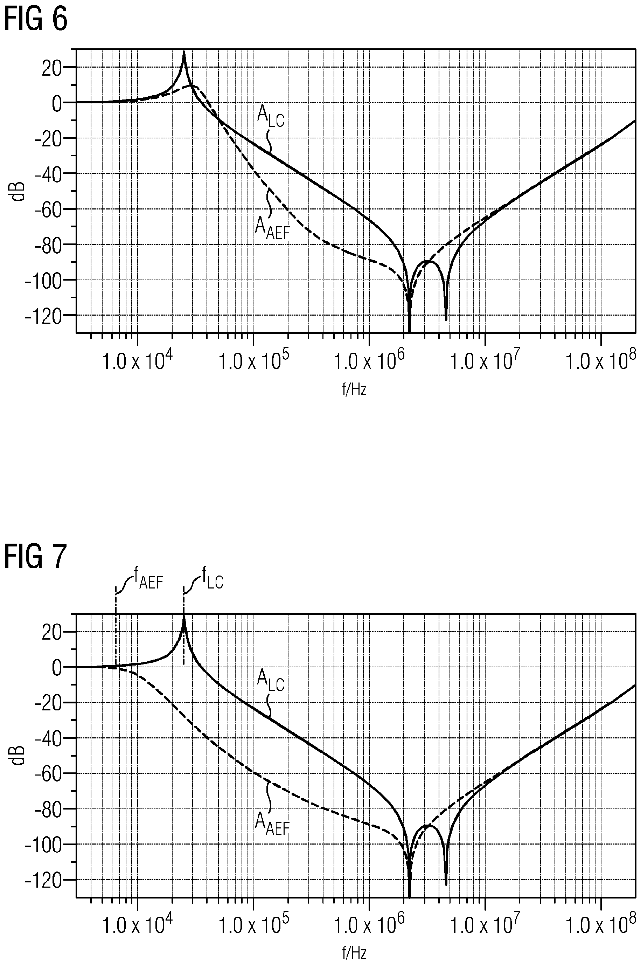

Im Ergebnis ergibt sich ein Verlauf $A_{\text{AEF}}$ der Dämpfung von Störungen, wie er in Figur 6 gezeigt ist im Vergleich zu einem Verlauf $A_{\text{LC}}$ einer Dämpfung durch ein passives LC-Filter. Es ist erkennbar, dass ab der Grenzfrequenz $f_{\text{AEF}}$ eine Verbesserung gegenüber dem passiven LC-Filter eintritt. Anstelle eines Dämpfungsverlauf mit 40 dB/dec verbessert sich die Dämpfung hier mit 80dB/dec. Der maximale Intersection Loss (IL) beträgt 28 dB bei 383 kHz.

Mit einer Feedforward-Topologie ist es sogar möglich, die Grenzfrequenz $f_{\text{AEF}}$ für das aktive Störfilter 50 unterhalb der Grenzfrequenz $f_{LC}$ für das passive Filter zu legen. Dieses Vorgehen ist bei Feedback-Topologien aus Stabilitätsgründen nicht möglich. Figur 7 zeigt Verläufe $A_{AEF}$ und $A_{LC}$ der Dämpfungen, wobei als Grenzfrequenz für das aktive Störfilter 50 jetzt eine Frequenz von $f_{AEF} = 4{,}1$ kHz gewählt wurde. Es zeigt sich, dass eine Peakbildung wie bei dem Verlauf $A_{AEF}$ aus Figur 6 bei ca. 20 kHz nicht mehr stattfindet und dass der -20 dB-Punkt von 60 kHz zu 19 kHz verschoben ist. Für eine vergleichbare Dämpfung müsste der Wert der Induktivität oder Kapazität im LC-Filter verzehnfacht werden gegenüber der hier verwendeten Werten.

Durch eine Verschiebung der Grenzfrequenz des aktiven Störfilters 50 in den Bereich unterhalb derjenigen des LC-Filters können die passiven Komponenten verkleinert werden, da das aktive Störfilter 50 bei deren Grenzfrequenz bereits aktiv ist.

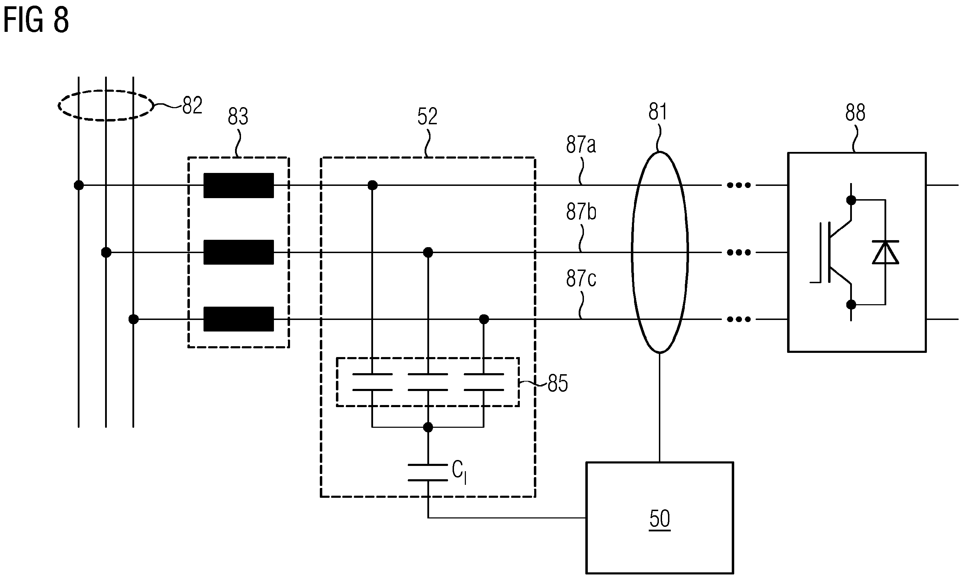

Figur 8 zeigt einen Ausschnitt aus einer Schaltung, die einen symbolisiert dargestellten Stromrichter 88 umfasst, der über drei Phasenleitungen 87a...c an ein Versorgungsnetz 82 angeschlossen ist.

Bei dieser dreiphasigen Schaltung wird das aktive Störfilter 50 so verwendet, dass nur Gleichtaktstörungen kompensiert werden. Dafür ist ein Stromsensor 81 so angeschlossen, dass er den Summenstrom der drei Phasenleiter 87a...c als Mess-Signal liefert. Das Mess-Signal wird in der bereits beschriebenen Weise als Eingangssignal für die Verstärkerschaltung 53 verwendet. Das sich ergebende Ausgangssignal wird über den Einkopplungskondensator $C_I$ in die Phasenleitungen zurückgespeist. Allerdings ist der Einkopplungskondensator $C_I$ hier über drei weitere Kondensatoren, die zwischen je eine der Phasenleitungen 87a...c und einen Sternpunkt geschaltet sind, mit den Phasenleitungen 87a...c verbunden.

Eine Rückkopplung zur Anpassung des Eingangswiderstands, beispielsweise eines digitalen Potentiometers, kann hier ebenfalls verwendet werden, indem hierfür ein weiterer Sternpunkt mit Kondensatoren erzeugt wird und die Spannung an diesem Punkt gemessen wird. Die Ankopplung dieses Sternpunkts würde zweckmäßig zwischen der Anbindung der Einkopplungsschaltung 52 und den Induktivitäten 83 erfolgen, also abseits der Störquelle, die hier durch den Stromrichter 88 gegeben ist.

In einer alternativen Ausgestaltung, die in Figur 8 nicht gezeigt ist, ist es möglich, dass der Einkopplungskondensator CI direkt an einen beliebige der drei Phasenleiter 87a...c angeschlossen ist und dass beispielsweise als Teil eines Gegentaktfilters X-Kondensatoren zwischen den Phasenleitern 87a...c vorliegen. Da die X-Kondensatoren eine wesentlich höhere Kapazität aufweisen als der Einkopplungskondensator $C_I$, wirkt die Einkopplung durch die X-Kondensatoren auf alle drei Phasenleiter 87a...c.

Im Gegensatz zu einer Ausgestaltung, bei der nicht nur Gleichtaktstörungen kompensiert werden sollen, kommt also hier auch bei einem dreiphasigen System nur ein einzelnes Störfilter 50 zum Einsatz, das auf alle Phasenleiter 87a...c wirkt und dafür entsprechend an diese angeschlossen sein muss.

Bezugzeichen

| 10 | DC/DC-Wandler |
| 50 | Aktives Störfilter |
| 12 | DC-Spannungsquelle |
| 14 | Hinleiter |
| 15 | Rückleiter |
| 16 | Last |
| 17 | Konverter-Induktivität |
| 18 | Umschalter |
| 20, 21, 22 | Knotenpunkt |
| 41 | Substrat |
| 42, 43 | Lastanschlüsse |
| 44 | temperaturabhängiger Widerstand |
| 45 | Heizelement |
| 46, 47 | Steueranschlüsse |
| 51 | Sensorschaltung |
| 52 | Einkopplungsschaltung |
| 53 | Verstärkerschaltung |
| 54 | Operationsverstärker |
| 61 | Rogowski-Spule |
| 81 | Stromsensor |
| 82 | Versorgungsnetz |
| 83 | Netzinduktivität |
| 85 | Kondensatoren |
| 87a...c | Phasenleiter |
| 88 | Stromrichter |
| $L_S$ | Sensorinduktivität |
| $R_S$ | Sensorwiderstand |
| $C_S$ | Sensorkondensator |
| $C_I$ | Injektorkondensator |
| $R_{FB}$ | Feedback-Widerstand |
| $R_{IN}$ | Eingangswiderstand |
| $A_{LC},$ | $A_{AEF}$ Signal-Abschwächung |
| $G_{id}$ | Verstärkung des idealen Integrierers |
| $G_{cl}$ | Close-loop-Verstärkung des aktiven Störfilters |
| $f_{LC}$ | Grenzfrequenz des passiven LC-Filters |
| $f_{AEF}$ | Grenzfrequenz des aktiven Störfilters |

**Patentansprüche**

1. Aktives Störfilter (50) in Feedforward-Topologie zur Reduzierung von Störsignalen in einer elektronischen Schaltung (10), umfassend

   - eine Sensorschaltung (51) zur Erfassung eines elektrischen Störsignals in einer Leitung (14) der Schaltung (10),
   - eine Verstärkerschaltung (53) mit einem Verstärker (54), wobei die Sensorschaltung (51) mit einem ersten Eingang des Verstärkers (54) gekoppelt ist,
- eine Einkopplungsschaltung (52) zur Einkopplung eines das Störsignal reduzierenden Ausgangs-Signals der Verstärkerschaltung (53) in die Schaltung (10),
- wobei der Verstärker (54) als Integrator beschaltet ist und dafür zwischen seinem Ausgang und dem ersten Eingang einen Kondensator aufweist, wobei dem Kondensator eine Induktivität parallelgeschaltet ist.

2. Aktives Störfilter nach Anspruch 1, bei dem die Einkopplungsschaltung einen Kondensator zwischen dem Ausgang des Operationsverstärkers und der Leitung umfasst.

3. Aktives Störfilter nach einem der vorangehenden Ansprüche, ausgestaltet zur Reduzierung von Gleichtakt-Störsignalen, bei dem die Sensorschaltung ausgestaltet ist, einen Summenstrom über die Leitungen oder Phasen der Schaltung zu bestimmen und die Einkopplungsschaltung einen Einkopplungs-Kondensator umfasst, der über jeweils einen weiteren Kondensator mit jeder der Leitungen verbunden ist.

4. Aktives Störfilter nach einem der vorangehenden Ansprüche mit einer zweiten Sensorschaltung zur Aufnahme von verbleibenden Störungen, wobei die zweite Sensorschaltung auf einer von der ersten Sensorschaltung abgewandten Seite der Einkopplungs-Schaltung mit der Leitung verbunden ist.

5. Aktives Störfilter nach einem der vorangehenden Ansprüche mit einem steuerbaren Eingangswiderstand zwischen der Sensorschaltung und dem Kondensator und mit einer Steuereinrichtung für den steuerbaren Eingangswiderstand.

6. Aktives Störfilter nach Anspruch 5, bei dem der steuerbare Eingangswiderstand ein digital veränderbarer Widerstand ist, insbesondere ein über eine Widerstandskaskade aufgebauter digital veränderbarer Widerstand.

7. Aktives Störfilter nach Anspruch 5, bei dem der steuerbare Eingangswiderstand ein temperaturgesteuerter Widerstand ist.

8. Aktives Störfilter nach Anspruch 7, bei dem der steuerbare Eingangswiderstand in thermischem Kontakt mit einem Temperatursteuerelement angeordnet ist und die Steuereinrichtung ausgestaltet ist zur Aufnahme eines Mess-Signals von der zweiten Sensorschaltung und einer Ansteuerung des Temperatursteuerelements basierend auf dem Mess-Signal.

9. Aktives Störfilter einem der Ansprüche 5 bis 8, bei dem die Steuereinrichtung einen Analog-Digital-Wandler zur Wandlung des Mess-Signals umfasst und eine Einrichtung zur digitalen Hochpassfilterung des digitalisierten Signals.

10. Aktives Störfilter nach Anspruch 4, bei dem die zweite Sensorschaltung einen Spannungssensor umfasst.

11. Aktives Störfilter nach einem der vorangehenden Ansprüche, bei dem die Sensorschaltung einen Stromsensor umfasst.

12. Elektronische Schaltung (10) mit einem aktiven Störfilter (50) nach einem der vorangehenden Ansprüche, wobei die elektronische Schaltung (10) einen Phasenleiter (14) und einen Neutralleiter (15) umfasst und die Sensorschaltung (51) und die Einkopplungsschaltung (52) mit dem Phasenleiter (14) verbunden sind.

13. Elektronische Schaltung (10) nach Anspruch 12, bei der Elemente der Schaltung (10) eine Störquelle ausbilden und die Sensorschaltung (51) bezüglich der Störquelle vor der Einkopplungsschaltung (52) mit dem Phasenleiter (14) verbunden ist.

14. Elektronische Schaltung (10) nach Anspruch 12 oder 13, bei dem der zweite Eingang des Verstärkers (54) mit dem Neutralleiter (15) oder Erdleiter verbunden ist.

15. Stromrichter (10) oder Schaltnetzteil nach einem der Ansprüche 12 bis 14.

## FIG 1

## FIG 2

FIG 3

## FIG 4

## FIG 5

## FIG 6

## FIG 7

FIG 8

EP 4 439 951 A1

Europäisches
Patentamt

European
Patent Office

Office européen
des brevets

**EUROPÄISCHER RECHERCHENBERICHT**

Nummer der Anmeldung

EP 23 16 6084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2010 057268 A (FUJI ELECTRIC SYSTEMS CO LTD) 11. März 2010 (2010-03-11) <br> * Abbildungen 3,4,7-10 * <br> ----- | 1-6,9-15 | INV. <br> H02M1/12 <br> H02M1/15 |
| X | WO 2014/048471 A1 (SCHAFFNER EMV AG [CH]) 3. April 2014 (2014-04-03) | 1-6,9-15 | ADD. <br> H02M1/44 |
| A | * Abbildung 4 * <br> * Absätze [0022] – [0029] * <br> ----- | 7,8 | |
| A | Nonymous A.: "Guide to ICs--AMPLIFIERS", , <br> 31. Dezember 2022 (2022-12-31), Seiten 1-18, XP093075161, <br> Gefunden im Internet: <br> URL:https://www.industrial-electronics.com /ic-abc_2.html <br> [gefunden am 2023-08-21] <br> * Abbildung 6 * <br> * Kapitel 7, zudem 6, 8, 9 * <br> ----- | 1-15 | |
| A | KUMAR SANGEETA ET AL: "Design Considerations for Low-Distortion Filter and Oscillator ICs for Testing High-Resolution ADCs", <br> IEEE TRANSACTIONS ON CIRCUITS AND SYSTEMS I: REGULAR PAPERS, IEEE, US, <br> Bd. 66, Nr. 9, <br> 1. September 2019 (2019-09-01), Seiten 3393-3401, XP011743059, <br> ISSN: 1549-8328, DOI: 10.1109/TCSI.2019.2926927 <br> [gefunden am 2019-08-27] <br> * Abbildung 1 * <br> ----- | 1-15 | RECHERCHIERTE SACHGEBIETE (IPC) <br><br> H02M |

-/--

Der vorliegende Recherchenbericht wurde für alle Patentansprüche erstellt

| Recherchenort | Abschlußdatum der Recherche | Prüfer |
|---|---|---|
| Den Haag | 21. August 2023 | Kail, Maximilian |

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 23 16 6084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2020 004825 A1 (KOSTAL AUTOMOBIL ELEKTRIK GMBH & CO KG [DE]) 10. Februar 2022 (2022-02-10) * Abbildung 4 * * Absätze [0017], [0019], [0020], [0024], [0025] * ----- | 2,3,11 | |
| A | ALBERT C CHOW ET AL: "Design and Evaluation of a Hybrid Passive/Active Ripple Filter with Voltage Injection", IEEE TRANSACTIONS ON AEROSPACE AND ELECTRONIC SYSTEMS, IEEE SERVICE CENTER, PISCATAWAY, NJ, US, Bd. 39, Nr. 2, 1. April 2003 (2003-04-01), Seiten 471-480, XP007908651, ISSN: 0018-9251, DOI: 10.1109/TAES.2003.1207259 * Abbildungen 1,2,5 * ----- | 4,10 | |
| A | Sc M Andreas ET AL: "Active Cancellation of Electromagnetic Emissions of Power Electronic Systems by Injecting Synthesized and Synchronized Signals", , 30. Juni 2020 (2020-06-30), XP093001923, Gefunden im Internet: URL:https://eldorado.tu-dortmund.de/bitstream/2003/39212/1/Dissertation_Bendicks.pdf [gefunden am 2022-11-24] * Abbildungen 4.15, 4.16, 7.3, 8.1 * ----- | 2,4,13 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 21. August 2023 | Kail, Maximilian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
Dokument

EPO FORM 1503 03.82 (P04C03)

**EP 4 439 951 A1**

**ANHANG ZUM EUROPÄISCHEN RECHERCHENBERICHT
ÜBER DIE EUROPÄISCHE PATENTANMELDUNG NR.**

EP 23 16 6084

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-08-2023

| Im Recherchenbericht angeführtes Patentdokument | Datum der Veröffentlichung | Mitglied(er) der Patentfamilie | Datum der Veröffentlichung |
|---|---|---|---|
| JP 2010057268 A | 11-03-2010 | JP 5263663 B2<br>JP 2010057268 A | 14-08-2013<br>11-03-2010 |
| WO 2014048471 A1 | 03-04-2014 | KEINE | |
| DE 102020004825 A1 | 10-02-2022 | KEINE | |

Für nähere Einzelheiten zu diesem Anhang : siehe Amtsblatt des Europäischen Patentamts, Nr.12/82

EPO FORM P0461